(19) Europäisches Patentamt / European Patent Office / Office européen des brevets

(11) **EP 1 282 808 B1**

(12) **EUROPÄISCHE PATENTSCHRIFT**

(45) Veröffentlichungstag und Bekanntmachung des Hinweises auf die Patenterteilung:
**09.07.2008 Patentblatt 2008/28**

(51) Int Cl.:
*G01D 3/08* (2006.01)     *F02D 41/22* (2006.01)

(21) Anmeldenummer: **01944899.2**

(22) Anmeldetag: **04.05.2001**

(86) Internationale Anmeldenummer:
**PCT/DE2001/001700**

(87) Internationale Veröffentlichungsnummer:
**WO 2001/086231 (15.11.2001 Gazette 2001/46)**

(54) **VORRICHTUNG ZUR FEHLERERKENNUNG BEI EINER DIGITALEN SIGNALAUSWERTEEINRICHTUNG**

DEVICE FOR ERROR RECOGNITION IN A DIGITAL SIGNAL EVALUATION UNIT

DISPOSITIF DE DETECTION D'ERREURS DANS UN DISPOSITIF D'EVALUATION DE SIGNAUX NUMERIQUES

(84) Benannte Vertragsstaaten:
**DE FR IT**

(30) Priorität: **10.05.2000 DE 10022815**

(43) Veröffentlichungstag der Anmeldung:
**12.02.2003 Patentblatt 2003/07**

(73) Patentinhaber: **ROBERT BOSCH GMBH**
**70442 Stuttgart (DE)**

(72) Erfinder:
• **SAULER, Juergen**
  **70192 Stuttgart (DE)**
• **TORNO, Oskar**
  **71701 Schwieberdingen (DE)**
• **HEINSTEIN, Axel**
  **71299 Wimsheim (DE)**
• **KLUTH, Carsten**
  **70469 Stuttgart (DE)**
• **HAEMING, Werner**
  **74861 Neudenau (DE)**

(56) Entgegenhaltungen:
DE-A- 19 635 440       DE-A- 19 756 081
US-A- 4 208 625        US-A- 4 251 769
US-A- 4 593 553        US-A- 5 522 254
US-A- 5 822 706

## Beschreibung

Die Erfindung betrifft eine Vorrichtung zur Fehlererkennung bei einer digitalen Signalauswerteeinrichtung nach der Gattung des Hauptanspruchs, gemäß JP-A-60203846.

Stand der Technik

Es ist bekannt, daß bei Signalauswerteeinrichtungen, die beispielsweise als analoge Auswerte-IC's aufgebaut sind, Überwachungsmaßnahmen erforderlich sind, die erkennen lassen, ob Fehlfunktionen vorliegen, dazu sind verschiedene Möglichkeiten bekannt. Beispielsweise wird in der DE-P 197 560 81.4 ein Verfahren zur Überwachung und Fehlererkennung vorgestellt, das bei einem analogen Auswerte-IC in Verbindung mit einer Klopferkennung bei einer Brennkraftmaschine durchgeführt wird. Bei dieser Klopferkennung werden die von den Klopfsensoren gelieferten Körperschallsignale dem Auswerte-IC über einen Multiplexer zugeführt. Dieser IC umfaßt wenigstens einen Verstärker, einen Filter, einen Gleichrichter und einen Integrator. Das resultierende Integratorergebnis wird als Ergebnis der Klopferkennung verwendet, um einen Klopfindex für die Klopfregelung zu berechnen. Die Signalauswertung erfolgt in diesem IC in analoger Form. Zur Überwachung der Funktionsfähigkeit des integrierten Schaltkreises (IC's) sind zwei Testmöglichkeiten implementiert. Diese Testmöglichkeiten werden als Testimpuls und Nulltest bezeichnet. Mittels einer solchen Diagnose kann der gesamte Signalpfad bis auf den Multiplexer auf Funktionsfähigkeit überprüft werden.

Bei der ersten Testmöglichkeit, dem Testimpuls wird nach dem Multiplexer ein Testsignal in die Auswertekette eingespeist. Durch dieses Signal wird der nachfolgende Integrator in relativ kurzer Zeit voll ausgesteuert, unabhängig von der Einstellung der Verstärkerstufe. Wird erkannt, daß die erwartete volle Aussteuerung des Integrators nach einer relativ kurzen Zeitspanne nicht eingetreten ist, wird auf Fehler erkannt. Beim zweiten Testmodus, dem 0-Test wird der Signalpfad nach dem Multiplexer aufgetrennt. Im Integrator werden dann nur die im integrierten Schaltkreis (IC) zu intern auftretenden Störgeräusche, bspw. Rauschen aufintegriert. Das im Integrator anstehende Signal gibt dann Auskunft darüber, ob fehlerhafte Störungen aufgetreten sind oder ob sonstige Fehlfunktionen vorhanden sind. Die Überwachung des integrierten Schaltkreises zur Auswertung von Klopfsignalen bei einer Brennkraftmaschine ist erforderlich, da beim Ausfall der Auswerteschaltung fehlerhafte Werte für die Klopfregelung vorgegeben sein würden und die Klopfregelung selbst nicht mehr richtig arbeiten würde und es dann zu Schädigungen der Brennkraftmaschine kommen könnte.

Neue Einrichtungen zur Signalauswertung, beispielsweise in Verbindung mit der Klopferkennung bei Brennkraftmaschinen weisen digitale Auswerte-IC's auf. Dabei erfolgt möglichst die gesamte Signalauswertung mit Hilfe eines digitalen Rechenwerks. Ein solcher Auswerte-IC, der für die Auswertung der Ausgangssignale von Klopfsensoren ausgelegt ist, wird in der Patentanmeldung DE-P 100 041 66.3 beschrieben. Bei einer solchen digitalen Signalauswertung wird aus den aufbereiteten und digitalisierten Ausgangssignalen der Sensoren, beispielsweise der Klopfsensoren eine typische Eigenschaft, beispielsweise klopftypische Bestandteile extrahiert und zur Klopferkennung mit vorgebbaren Schwellwerten verglichen. Eine Überprüfung oder Überwachung der Funktionsfähigkeit des IC wird bei dieser in der DE-P 100 041 66.3 beschriebenen digitalen Signalauswertung nicht durchgeführt.

Aufgabe der Erfindung

Die Aufgabe der Erfindung besteht darin, bei einer digitalen Signalauswertung, beispielsweise bei einer Klopferkennung mit einem digitalen Auswerte-IC eine zuverlässig funktionierende Fehlererkennung durchzuführen, wobei die möglicherweise auftretenden Fehler im gesamten Auswertepfad des digitalen Auswerte-IC zuverlässig erkannt werden sollen.

Vorteile der Erfindung

Die erfindungsgemäße Vorrichtung zur Fehlererkennung bei einer digitalen Signalauswertung mit den Merkmalen des Anspruchs 1 hat den Vorteil, daß Fehler bzw. Fehlfunktionen zuverlässig erkannt werden und daß die bei der digitalen Realisierung der Signalauswerteeinrichtung möglichen flexiblen Anpassungen beibehalten werden können. Durch die vorgeschlagenen Diagnosen ist es möglich, sowohl den Digital- als auch den Analogteil der gesamten Auswerteeinrichtung, insbesondere des Auswerte-IC zu überwachen.

Erzielt werden diese Vorteile durch eine Vorrichtung zur Fehlererkennung bei einer digitalen Signalauswertung mit den Merkmalen des Anspruchs 1. Es werden zwei Testfunktionen zur Fehlererkennung ausgewertet und die Reaktion der Auswerteeinrichtung auf diese Testfunktionen wird geprüft.

Weitere Vorteile der Erfindung werden durch die in den Unteransprüchen angegebenen Maßnahmen erzielt. Dabei ist ihr Einsatz in Verbindung mit einer Klopferkennung bei einer Brennkraftmaschine besonders vorteilhaft, daß die Steuerlogik für das erfindungsgemäße Verfahren vorteilhafterweise im Rechner des Steuergerätes der Brennkraftmaschine implementiert wird.

Zeichnung

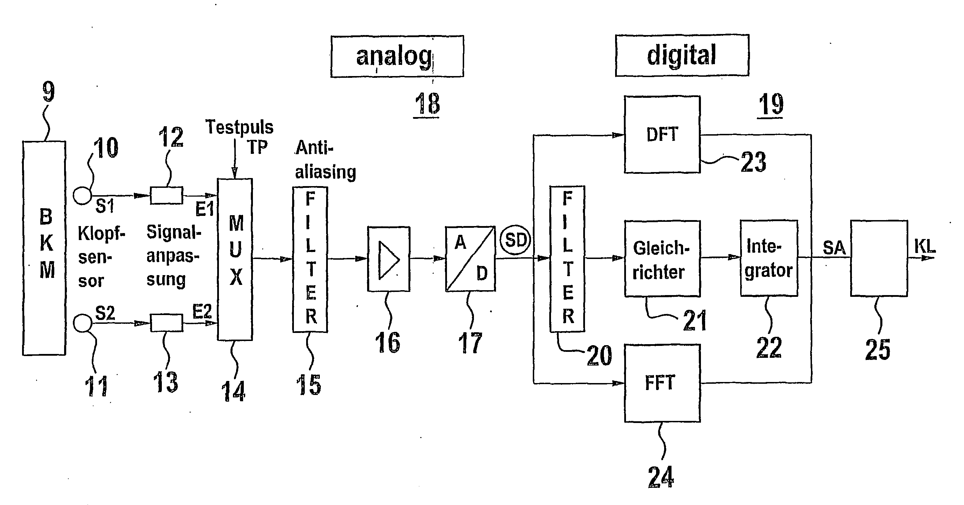

Ein Ausführungsbeispiel der Erfindung ist in der einzigen Figur der Zeichnung dargestellt und wird in der nachfolgenden Beschreibung näher erläutert.

Beschreibung

Das in der Figur dargestellte Ausführungsbeispiel der Erfindung ist beispielhaft für die Auswertung der Ausgangssignale zweier Klopfsensoren 10 und 11 angegeben, die beispielsweise jeweils einem Zylinder einer nicht näher dargestellten Brennkraftmaschine 9 zugeordnet sind. Die Ausgangssignale S1 und S2 der Klopfsensoren 10 und 11 werden jeweils einer Signalanpassungsschaltung 12, 13 zugeführt und von dieser so aufbereitet, daß sie vom Multiplexer 14 in vorgebbarer Weise weitergeleitet werden können.

Der Multiplexer 14 sowie ein Filter 15, beispielsweise ein Antialiasingfilter, ein nachfolgender Verstärker 16 sowie ein Analog/Digital-Wandler 17 bilden den Analogteil 18 der Signalaufbereitung. Die eigentliche Signalaufbereitung erfolgt im Digitalteil 19, das sich an den Analogteil anschließt. Dem Digitalteil 19 wird dazu das vom Analog/Digital-Wandler 17 gelieferte Signal fehlt in Zeichnung SD, das ein Digitalsignal ist, zugeführt.

Die digitale Signalauswertung bzw. der Digitalteil 19 ist beispielhaft für drei verschiedene Ausführungsformen angegeben. Zum einen kann der Digitalteil 19 ein Filter 20, einen Gleichrichter 21 und einen Integrator 22 umfassen oder es kann Mittel zur Durchführung einer diskreten Fourier Transformation 23 oder Mittel zur Durchführung einer schnellen Fourier Transformation (Fast Fourier Transformation FFT) 24 umfassen. Welche Signalauswertung durchgeführt wird, hängt von vorgebbaren Gegebenheiten ab und kann an die zur Verfügung stehenden Signale SD angepaßt werden oder projektspezifisch gewählt werden. Am Ausgang der digitalen Signalauswertung 19 entsteht das Auswertesignal SA, das die Klopfindizes umfaßt. Ausgehend von diesen Klopfindizes wird dann im Block 25, beispielsweise einem Vergleicher, Klopfen erkannt. Block 25 kann auch ein Controller des Steuergerätes der Brennkraftmaschine sein, das die Klopferkennung zur Beeinflussung bestimmter Größen der Brennkraftmaschine, beispielsweise der Zündung benötigt. Generell kann die gesamte Vorrichtung zur Klopferkennung auch Bestandteil des Steuergerätes der Brennkraftmaschine sein.

Mit dem in der Figur dargestellten Ausführungsbeispiel für eine Signalauswertung können mehrere Klopfsensoren 10, 11 über symmetrische Eingangsbeschaltungen an einen Multiplexer 14 angeschlossen werden. Dieser schaltet immer nur den Klopfsensor durch, der die gerade ablaufende Verbrennung am besten erfaßt. Anschließend wird das Ausgangssignal des Multiplexers 14 über das Filter 15, beispielsweise ein Antialiasingfilter sowie gegebenenfalls noch über einen Verstärker 16 zum Analog/Digital-Wandler 17 geführt.

Nachdem das Signal SD am Ausgang des Analog/Digital-Filters 17 digital vorliegt, kann die eigentliche digitale Signalauswertung erfolgen. Diese digitale Signalauswertung, die im Digitalblock 19 abläuft, beinhaltet üblicherweise eine Energieauswertung. Anstelle einer Energieauswertung könnte auch eine Spitzenwertermittlung zur nachfolgenden Klopferkennung durchgeführt werden.

Ein mögliches Verfahren für die Energieauswertung, das in Verbindung mit einer in der DE-P 197 560 81.4 beschriebenen Analogschaltung bereits bekannt ist, besteht darin, das Signal des Klopfsensors zu filtern, das gefilterte Signal gleichzurichten oder zu quadrieren und anschließend das Signal zu integrieren. Alternativ könnte auch eine diskrete Fourier Transformation (DFT) oder eine Fast Fourier Transformation (FFT) durchgeführt werden. Die drei genannten Auswerteverfahren erlauben jeweils eine Auswertung von mehreren Frequenzbereichen sowie eine Unterdrückung von vorhandenen Störfrequenzen. Als Ergebnis dieser Auswertung liegen dann pro Verbrennung in einem Zylinder der Brennkraftmaschine ein oder auch mehrere Klopfindizes vor. Auf Klopfen wird erkannt, wenn dieser Klopfindex oder diese Klopfindizes bestimmte vorgebbare und gegebenenfalls anpaßbare Schwellen überschreiten. Beispielsweise kann bei diesem Vergleich auch ein Referenzwert für den klopffreien Betrieb berücksichtigt werden. Ein solcher Referenzwert läßt sich mit der selben Auswerteeinrichtung immer dann gewinnen, wenn sichergestellt ist, dass klopffreier Betrieb vorliegt. Klopffreier Betrieb liegt dabei bei bekannten Bedingungen des Betriebes der Brennkraftmaschine vor. Da die erfindungsgemäße Klopferkennung in Verbindung mit einem Steuergerät für die Brennkraftmaschine eingesetzt wird, das diese Betriebsbedingungen erkennt, ist es möglich, aus den Signalen SA sowohl die Klopfwerte ikr als auch die Referenzwerte rkr zu ermitteln

Mit den üblichen Bezeichnungen für:

| | |
|---|---|
| Klopfwert | ikr |
| Referenzwert | rkr |
| Klopferkennungsschwelle | ke |

wird dann auf Klopfen erkannt, wenn gilt:

$$ikr/rkr > ke$$

Die obengenannte Bedingung für die Klopferkennung, die beispielsweise im Schaltungsteil 25 geprüft wird, wird auch bei herkömmlichen Klopferkennungssystemen verwendet, im Unterschied zu den herkömmlichen Systemen wird jedoch bei der beschriebenen Lösung die Signalauswertung und die wesentliche Signalaufbereitung als digitale Signalauswertung durchgeführt. Klopfwert, Referenzwert und Klopferkennungsschwelle sind jeweils Digitalwerte, so daß damit eine Digitalisierung des Signals SA entfällt.

Die Signalauswertung erfolgt in verschiedenen Frequenzbereichen, wobei die Auswahl der Frequenzbereiche so erfolgt, dass die Frequenzbereiche mit hohem Klopfsignalanteil bevorzugt werden und die mit hohem Störanteil (Störfrequenzen) unterdrückt werden. Die für einzelne Frequenzen ermittelten Klopfwerte ikr stellen Klopfindizes dar, die letztendlich zur Klopferkennung ausgewertet werden.

Für eine so aufgebaute und arbeitende digitale Auswerteeinrichtung bzw. einen digitalen Auswerte-IC wird erfindungsgemäß eine Überwachungsfunktion eingesetzt, die zwei unterschiedliche Tests durchführt. Die Überwachung kann dabei während vorgebbarer Überwachungsphasen erfolgen. Die Überwachungsphasen werden dann beispielsweise so festgelegt, daß sie gleich nach dem Einschalten der Brennkraftmaschine aktiviert werden. Es ist auch möglich, die Überwachungsphasen so zu legen, daß sie bei Betriebsbedingungen liegen, bei denen ein Auftreten von Klopfen nicht zu erwarten ist.

Zur Durchführung der Überwachung läßt sich der IC in zwei Testmodi schalten. Bei dem ersten Testmodus, der auch als Testimpuls bezeichnet wird, wird am Multiplexer 14 ein Testsignal eingespeist. Dabei kann das Testsignal auf einen vorhandenen Eingang des Multiplexers 14 gegeben werden oder auf einen zusätzlichen Eingang, der nur für den Test genutzt wird. Als Filter für das vom Multiplexer 14 kommende Signal kann ein Filter aus dem RAM oder ein Filter aus einem Test-ROM verwendet werden. Das Testsignal wird so ausgelegt, daß der Integrator bei der größten Verstärkung möglichst weit ausgesteuert wird. Die Aussteuerung des Integrators 22 ist auch abhängig von dem verwendeten Filter und der Meßfensterlänge. Die Meßfensterlänge ist beispielsweise die die Dauer des Testsignals.

Das Testsignal bzw. ein Testpuls TP wird möglichst in der Auswerteschaltung selbst erzeugt, könnte aber auch in einer möglichen Ausgestaltung von außen zugeführt werden. Der IC ist in Ordnung, wenn der Integrator einen vorgebbaren Wert überschreitet. Zur Erkennung, daß der IC in Ordnung ist, wird der Wert des Integrators beispielsweise nach einer vorgebbaren Zeit mit einem Schwellwert verglichen, wobei dieser Vergleich mittels eines Komparators oder einer Vergleichsfunktion im Rechner erfolgen kann. Überschreitet der Integratorwert den Schwellwert, wird der IC als in Ordnung erkannt, überschreitet der Integratorwert dagegen den Schwellwert nicht, kann eine Anzeige ausgelöst werden und/oder auf die Klopfregelung eingegriffen werden und gegebenenfalls auf einen Notbetrieb der Klopfregelung umgeschaltet werden.

In einem zweiten Testmodus, der als Nulltest bezeichnet wird, wird das Eingangssignal am Multiplexer 14 weggeschaltet, d. h. es wird kein Signal in die Auswerteschaltung eingespeist. Zusätzlich zum Wegschalten der Signale können die beiden Eingänge von E1 und von E2 am Multiplexer 14 kurzgeschlossen werden. Es werden dabei also die zwei Eingänge eines Sensors kurzgeschlossen. Als Filter für das dann vom Multiplexer kommende Signal kann wieder ein Filter aus dem RAM oder dem Test ROM benutzt werden. Der IC ist in Ordnung, kurzgeschlossen werden die 2 Eingänge eines Sensors E1, E2, wenn das Integratorergebnis unter einem vorgebbaren Schwellwert liegt. Der Vergleich des Integratorinhalts mit diesem zweiten Schwellwert wird mit Hilfe eines Vergleichers (Komparator oder Rechnerfunktion) durchgeführt. Wird ein Fehler erkannt, kann wiederum eine Anzeige und/oder ein Eingriff auf die Klopfregelung erfolgen. Die Auswahl der Schwellwerte kann anhand von zu erwartenden Integratorwerten erfolgen und gegebenenfalls variiert werden.

Der Nulltest kann auch eingesetzt werden, um eine Offset-Korrektur durchzuführen, wenn die Einstreuungen insbesonders im analogen Signalpfad zu groß sind. Es wird dann der beim Nulltest ermittelte Integratorwert bzw. -inhalt bei der Festlegung des Nullpunkts der digitalen Auswerteschaltung berücksichtigt.

Durch die beiden Diagnosemöglichkeiten kann sowohl der Digital- als auch der Analogteil der Auswerteeinrichtung überprüft werden. Dabei wird festgestellt, ob der integrierte Schaltkreis IC der Auswerteeinrichtung richtig funktioniert. Der Ort, an dem der Fehler aufgetreten ist (Multiplexer 14, Verstärker 16 usw.) kann zwar nicht festgestellt werden, dies ist jedoch auch nicht erforderlich, da die Information, ob der IC voll funktionsfähig ist oder nicht, ausreicht um eine zuverlässige Klopferkennung und damit eine zuverlässige Klopfregelung zu gewährleisten.

Die Durchführung der einzelnen Testfunktionen wird durch Mittel, beispielsweise durch den Rechner des Steuergerätes gesteuert, die es erlauben, die Testfunktionen nur zu vorgebbaren Zeiten und/oder bei Vorliegen vorgebbarer Bedingungen zu aktivieren. Die Überwachung kann dabei beispielsweise im laufenden Betrieb, bei vorgebbaren Betriebsbedingungen oder in der Initialisierungsphase und/oder im Nachlauf durchgeführt werden. Erkannte Fehler werden angezeigt und/oder in einem Fehlerspeicher abgelegt.

Die Erfindung wurde anhand einer Fehlerüberwachung bei einem digitalen Auswerte-IC für eine Klopferkennung beschrieben, sie kann aber auch bei anderen digitalen IC's eingesetzt werden. Ebenfalls ist diese Erfindung bei einer digitalen Signalauswertung einsetzbar, welche nicht in einem separaten IC, sondern direkt in einem Rechner eines Steuergerätes, beispielsweise eines Steuergerätes für eine Brennkraftmaschine eingesetzt (implementiert) wird.

**Patentansprüche**

1. Vorrichtung zur Signalauswertung mit einem oder mehreren Sensoren zum Erfassen einer Messgröße, wobei Mittel zur Fehlererkennung vorhanden sind, die wenigstens zwei unterschiedliche Testfunktionen durchführen, wobei die Vorrichtung zur Signalauswertung einen Analogteil (18) und einen Digitalteil (19) umfasst, **dadurch gekennzeichnet, dass** durch die Mittel zur Fehlererkennung bei beiden unterschiedlichen Testfunktionen der Analogteil (18) und der Digitalteil (19) der Vorrichtung zur Signalauswertung überprüft werden.

2. Vorrichtung zur Signalauswertung nach Anspruch 1, **dadurch gekennzeichnet, daß** die Vorrichtung zur Signalauswertung symmetrische Eingänge aufweist, an die der Sensor oder die Sensoren angeschlossen sind.

3. Vorrichtung zur Signalauswertung nach Anspruch 1 oder 2, **dadurch gekennzeichnet, daß** der Sensor oder die Sensoren Klopfsensoren sind und eine Klopferkennung durchgeführt wird, deren Ergebnis für eine Klopfregelung herangezogen wird.

4. Vorrichtung zur Signalauswertung nach Anspruch 1, 2 oder 3, **dadurch gekennzeichnet, daß** sie am Eingang einen Multiplexer (14) aufweist, mit dem die Sensoren in Verbindung stehen und daß bei einem ersten Test ein Testsignal (TP) am Multiplexer (14) eingespeist wird, das so gewählt wird, daß es zu einer großen Aussteuerung am Ausgang der digitalen Signalauswertung, insbesonders an einem Integrator 22 führt.

5. Vorrichtung zur Signalauswertung nach Anspruch 4, **dadurch gekennzeichnet, daß** das Testsignal (TP) in einer Auswerteschaltung selbst erzeugt wird.

6. Vorrichtung nach einem der vorhergehenden Ansprüche, **dadurch gekennzeichnet, daß** das Testsignal (TP) von außen in eine Auswerteschaltung eingespeist wird.

7. Vorrichtung zur Signalauswertung nach einem der vorhergehenden Ansprüche, **dadurch gekennzeichnet, daß** zur Durchführung eines Nulltests die Eingänge am Multiplexer (14) weggeschaltet und/oder kurzgeschlossen werden und der sich dann an einem Integrator (22) einstellende Integratorwert mit einem vorgebbaren Wert verglichen wird und auf Fehler erkannt wird, wenn ein vorgebbarer Wert überschritten wird.

8. Vorrichtung zur Signalauswertung nach Anspruch 7, **dadurch gekennzeichnet, daß** das Ergebnis des Nulltests für eine Offsetkompensation berücksichtigt wird.

9. Vorrichtung zur Signalauswertung nach einem der vorgergehenden Ansprüche, **dadurch gekennzeichnet, daß** Mittel vorhanden sind, die die Testfunktionen nur zu vorgebbaren Zeiten und/oder bei vorliegen von vorgebbaren Betriebsbedingungen aktivieren.

10. Vorrichtung zur Signalauswertung nach Anspruch 9, **dadurch gekennzeichnet, daß** die Mittel eine Überwachung im laufenden Betrieb oder bei vorgebbaren Betriebspunkten oder in der Initialisierungsphase und/oder im Nachlauf aktivieren.

**Claims**

1. Apparatus for signal evaluation having one or more sensors for capturing a measured variable, where means for error recognition are provided which perform at least two different test functions, the apparatus for signal evaluation comprising an analogue part (18) and a digital part (19), **characterized in that** the means for error recognition check the analogue part (18) and the digital part (19) of the apparatus for signal evaluation in both different test functions.

2. Apparatus for signal evaluation according to Claim 1, **characterized in that** the apparatus for signal evaluation has symmetrical inputs to which the sensor or the sensors is/are connected.

3. Apparatus for signal evaluation according to Claim 1 or 2, **characterized in that** the sensor or the sensors are knock sensors and knock recognition is performed, the result of which is used for knock regulation.

4. Apparatus for signal evaluation according to Claim 1, 2 or 3, **characterized in that** it has, at the input, a multiplexer (14) to which the sensors are connected and **in that** a first test prompts a test signal (TP) to be supplied to the multiplexer (14), said test signal being chosen such that it results in a high level of modulation at the output of the digital signal evaluation, particularly on an integrator (22).

5. Apparatus for signal evaluation according to Claim 4, **characterized in that** the test signal (TP) is produced in an evaluation circuit itself.

6. Apparatus according to one of the preceding claims, **characterized in that** the test signal (TP) is supplied to an evaluation circuit externally.

7. Apparatus for signal evaluation according to one of the preceding claims, **characterized in that** a null test is performed by disconnecting and/or shorting the inputs on the multiplexer (14) and comparing the integrator value which is then produced on an integrator (22) with a prescribable value and recognizing errors in it if a prescribable value is exceeded.

8. Apparatus for signal evaluation according to Claim 7, **characterized in that** the result of the null test is used for offset compensation.

9. Apparatus for signal evaluation according to one of the preceding claims, **characterized in that** means are provided which activate the test functions only at prescribable times and/or when prescribable operating conditions are present.

10. Apparatus for signal evaluation according to Claim 9, **characterized in that** the means activate monitoring in the course of operation or at prescribable operating points or in the initialization phase and/or during slowing-down.

**Revendications**

1. Dispositif d'exploitation d'un signal comportant un ou plusieurs capteurs pour saisir une grandeur de mesure, avec des moyens de détection de défaut effectuant au moins deux fonctions de test différentes, le dispositif d'exploitation du signal comprenant une partie analogique (18) et une partie numérique (19),
   **caractérisé en ce que**
   les moyens de détection de défaut vérifient la partie analogique (18) et la partie numérique (19) du dispositif d'exploitation de signal. par deux fonctions de test différentes.

2. Dispositif d'exploitation de signal selon la revendication 1,
   **caractérisé en ce qu'**
   il comporte des entrées symétriques pour l'exploitation du signal, le ou les capteurs étant reliés à ces entrées.

3. Dispositif d'exploitation de signal selon la revendication 1 ou 2,
   **caractérisé en ce que**
   le ou les capteurs sont des capteurs de cliquetis effectuant une détection de cliquetis dont le résultat est utilisé pour la régulation du cliquetis.

4. Dispositif d'exploitation de signal selon la revendication 1, 2 ou 3,
   **caractérisé en ce qu'**
   il comporte en entrée, un multiplexeur (14) par lequel les capteurs sont reliés et **en ce que** pour un premier test, un signal de test (TP) est injecté par le multiplexeur (14) de façon choisie pour conduire à un signal de commande important à la sortie du circuit d'exploitation numérique de signal, notamment d'un intégrateur (22).

5. Dispositif d'exploitation de signal selon la revendication 4,
   **caractérisé en ce que**
   le signal de test (TP) est généré directement dans un circuit d'exploitation.

6. Dispositif d'exploitation de signal selon l'une des revendications précédentes,
   **caractérisé en ce que**
   le signal de test (TP) est injecté de l'extérieur dans un circuit d'exploitation.

7. Dispositif d'exploitation de signal selon l'une des revendications précédentes,
   **caractérisé en ce que**
   pour effectuer un test de zéro, on coupe les entrées du multiplexeur (14) et/ou on les court-circuite et on compare la valeur d'intégration qui s'établit sur l'intégrateur (22) à une valeur prédéfinie et on constate un défaut si une valeur prédéfinie est dépassée.

8. Dispositif d'exploitation de signal selon la revendication 7,
   **caractérisé en ce qu'**
   on tient compte du résultat du test zéro pour la compensation du décalage.

9. Dispositif d'exploitation de signal selon l'une des revendications précédentes,
   **caractérisé par**
   des moyens qui activent les fonctions de test seulement à des instants prédéfinis et/ou en présence de conditions de fonctionnement prédéfinies.

10. Dispositif d'exploitation de signal selon la revendication 9,
   **caractérisé en ce que**
   les moyens activent une surveillance en fonctionnement permanent ou en des points de fonctionnement prédéfinis ou en phase d'initialisation et/ou en phase de fin de mouvement.

**analog** _18_

**digital** _19_

9

10 12 Testpuls TP

Antialiasing DFT 23

S1 E1
B Klopf- Signal- M F F Inte- SA
K sen- anpas- U I A SD I Gleich- grator KL
M sor sung X L D L richter
T T
S2 E2 E R E 20 FFT
R

11 13 14 15 16 17 21 22 25

24

EP 1 282 808 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 60203846 A
- DE P19756081
- DE P10004166